(19) **Europäisches Patentamt**
**European Patent Office**
**Office européen des brevets**

(11) **EP 3 743 865 B1**

(12) **EUROPEAN PATENT SPECIFICATION**

(45) Date of publication and mention
of the grant of the patent:
**10.04.2024 Bulletin 2024/15**

(21) Application number: **18842613.4**

(22) Date of filing: **21.12.2018**

(51) International Patent Classification (IPC):
**G06Q 10/10** *(2023.01)*

(52) Cooperative Patent Classification (CPC):
**G06Q 10/10; G06Q 10/101; G06Q 10/103;
G06Q 10/1097**

(86) International application number:
**PCT/US2018/066988**

(87) International publication number:
**WO 2019/147367 (01.08.2019 Gazette 2019/31)**

(54) **INTELLIGENT TARGETING OF FILES NEEDING ATTENTION**

INTELLIGENTES TARGETING VON FILES DIE AUFMERKSAMKEIT BENÖTIGEN

CIBLAGE INTELLIGENT DE FICHIERS NÉCESSITANT L'ATTENTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.01.2018 US 201815879406**

(43) Date of publication of application:
**02.12.2020 Bulletin 2020/49**

(73) Proprietor: **Microsoft Technology Licensing, LLC
Redmond, WA 98052-6399 (US)**

(72) Inventors:
• **DEMARIS, John Lincoln
Redmond, Washington 98052-6399 (US)**
• **HOLME, Daniel Friel
Redmond, Washington 98052-6399 (US)**

• **MCNULTY, Christopher Francis
Redmond, Washington 98052-6399 (US)**
• **STORY, Ian David
Redmond, Washington 98052-6399 (US)**

(74) Representative: **Grünecker Patent- und
Rechtsanwälte
PartG mbB
Leopoldstraße 4
80802 München (DE)**

(56) References cited:
**US-A1- 2006 080 619      US-A1- 2006 259 524
US-A1- 2011 276 925      US-A1- 2015 220 519
US-A1- 2015 319 198      US-A1- 2016 321 250
US-A1- 2017 344 541**

## Description

## BACKGROUND

Information workers are frequently asked to interact with documents to perform their job functions. Often times, workers are prompted to read, edit, review, or otherwise interact with a document or a collection of documents When a group of workers are prompted to interact with the collection of documents, it is common for one or more workers to lag behind the others. The situation may be a mere inconvenience or a significant safety or security concern if one or more members of a group have not reviewed and updated safety or security protocols.

Even if it is known that a worker has lagged in interacting with a document or collection of documents, it remains a challenge to effectively prompt the worker to view the document(s). For example, simply retrying the previous methods of providing the document(s) may lead to the same result - failure to interact with the document(s). Even if a content management system offers a task list that shows items needing the worker's attention, this still requires the worker to go to a "special place" to view the information.

It is with respect to these and other considerations that the disclosure made herein is presented.
US 2017/344541 A1 relates to techniques for enhanced tracking of user interactions with online documents, such as, interaction tracking on a sub-document level of granularity and/or interaction tracking that involves storing one or more interaction parameters.
US 2006/259524 A1 relates to a document management system that includes means for receiving a document through a network and converting the document to a format that is compatible with an online electronic filing system. The system can split the document into a plurality of sub-documents that can be assigned to different editors. The editors can work in parallel with one another to prepare the document for filing. After the editors have made revisions, if any, to their respective sub-documents, the system merges the sub-documents into a single EDGAR-compliant document for submission to the EDGAR system.
US 2015/319198 A1 relates to techniques for making an electronic document easier to use based on prior interactions with the same or a similar document by other users. An electronic document is presented to one or more users in an interactive environment. Interactions between the users and the document can be recorded as usage data. Based on the usage data, an enhanced user interaction feature associated with the document is configured.
US 2011/276925 A1 relates to presentation of information describing user activities with regard to resources. A resource reference is detected in a base resource, such as a web page or an email message. The resource reference refers to a target resource, such as another webpage or another email message. An appropriate activity-based resource type for the resource reference is then identified. The resource reference is then linked to an activity-based resource such that when the base resource is displayed and a user interacts with the resource reference, the activity-based resource is displayed to the user.
US 2015/220519 A1 relates to electronic document retrieval and reporting with review cost and/or time estimation.
US 2006/080619 A1 relates to techniques for document draft reminder based on inactivity.
US 2016/321250 A1 relates to dynamic content suggestion in a sparse traffic environment.

## Summary

It is the object of the present invention to improve prior art systems. This object is solved by the subject matter of the independent claims. Preferred embodiments are defined by the dependent claims.
One goal of the disclosed embodiments is to improve engagement across collections of documents. While documents and collections of documents are discussed throughout this disclosure, any type of content is similarly contemplated. For example, individual websites or collections of websites, emails, audio, video, etc., may be analyzed and acted upon similarly.
One key distinction of the disclosed embodiments is targeting documents based on patterns of inaction, as opposed to targeting based on patterns of action. Targeting based on a pattern of action tries to make one user similar to another. For example, if users A and B have purchased similar items on an online shopping site, but user B has purchased a few additional items, targeting based on the pattern of action may suggest the additional items to user A. Another example of targeting based on patterns of action is to analyze a group of people and suggest content to a member of the group based on the actions of other people in the group. For example, if some members of a product team start to read a particular blog post, a system of targeting based on patterns of action may recognize this trend and recommend the blog post to other members of the team.
In contrast, targeting based on patterns of inaction, as disclosed herein, determines when inactivity of a user is statistically significantly different from the inactivity of other users. For example, a human resources executive might create a bundle of content he/she wants a group of people, such as new hires, to review. The documents may be related to benefits enrollment for the year, an event which has a deadline. As the new hires review the documents, some individuals may stand out for not reviewing the documents, or for lagging significantly behind in reviewing the documents. Crossing a threshold of difference of inactivity signals a pattern of inaction, triggering attempts to remediate by promoting content to the user. In one embodiment, promoting content includes displaying links to content in novel ways, as discussed herein. In one embodiment, the threshold may be a 90% confidence level that an individual is at least 2 standard deviations behind the engagement of the group (e.g. a Z-score of 1.64), but other confidence levels, standard deviations, and Z-scores are similarly contemplated.

A threshold may be made lower (i.e. easier to trigger) if a priority of the documents that haven't been interacted with is high. For example, security related documents may be assigned a higher priority, and so a lower threshold would be applied, rather than a weekly status update. Similarly, as a priority of a document changes, the associated threshold may change inversely. For example, as a deadline approaches, urgency for the documents to be reviewed may increase, causing the threshold of difference to be lowered.

One goal of the disclosed embodiments is to avoid false signal activity, which may become annoying, causing a user to disable the feature and lose all benefit. In one embodiment, false signal activity is avoided by using a high threshold, e.g. a 90% confidence level that a user has viewed at least two standard deviations fewer documents. However, other facts may be considered, such as a current time zone of a user. If a member of a team is located many time zones away, a lag in engagement may be caused by different sleep patterns. In one embodiment, different time zones are accounted for by allowing users a minimum amount of time from the beginning of their workday to engage with the documents before a signal is generated.

Similarly, even if all members of the team are located in the same geographic area, team members may be given a minimum amount of time to engage with the documents before a signal is generated, even if everyone else on the team has already interacted with the documents. For example, if a ten member team has a new security protocol distributed, and nine of the team members have read it within two minutes of distribution, the 10th team member may be given an hour to read the document before further action is taken. The amount of time allowed is customizable and may depend on a priority of the documents.

Another goal of the disclosed embodiments is to adjust the threshold for identifying inactivity based on how frequently a user opens suggested documents. For example, users who respond to suggestions more frequently than an average user may derive more benefit from a suggestion, and as such would appreciate receiving suggestions more frequently. In this case, the threshold for detecting inactivity could be lowered, thereby increasing the number of suggestions presented compared to an average user. At the same time, users who are less likely act on a suggestion may have their threshold for detecting inactivity increased, thereby decreasing the number of suggestions presented.

Other mechanisms are contemplated for determining when a user hasn't interacted with a document soon enough, such as when one user has asked another user to edit or comment on a document. For example, a first user may initiate a process that requests a second user to comment on or complete a section of a document. The request may or may not be associated with a deadline. The request may be made only of the second user, i.e. there is no group to compare the second user's engagement with. Based on factors such as content type, amount of time outstanding, etc., a grace period is determined after which the inaction will be signaled and the corresponding content promoted. A similar mechanism may be employed when the first user solicits feedback on a document from the second user.

Other mechanisms for determining inaction don't involve person-to-person targeting. For example, a user uploads a file to a location that requires metadata, but the user has not filled out the metadata. Or, the user checks out a file from a version control system and leaves it checked out for a long time (beyond a threshold). Or, a user uploads a file that contains sensitive information to a non-secure location. Once one of these conditions is recognized, the appropriate content can be promoted to remedy the situation.

Once a user has been identified as inactive with regard to a document, embodiments promote the document to the user in novel ways. As discussed above, existing solutions such as task lists are deficient in that a user must know the task list exists, the user must know how to find the task list, and the user must think to use the task list during an otherwise busy day. One goal of the disclosed embodiments is to present the document (or a link thereto) in the user's path of normal usage, thereby increasing the likelihood that the user will be made aware of the document. This is motivated by the insight that the user hasn't interacted with the document as it was originally provided, and so merely providing the same document via the same mechanism a second time is less likely to be effective.

For example, upon a user viewing the end of a word processing document, one embodiment displays a "documents to view next" signal. A "Documents to view next" prompt may be placed after the last piece of content in the word processing document, and may include an in-line list of documents, such that the user's eye is naturally directed to the list. Additionally or alternatively, the list may appear in a task pane or other window adjacent to the end of the word processing document.

Another embodiment inserts or appends the document, or a link thereto, to a file listing. For example, a link to the document may be appended to the contents of a folder, the contents of a collaborative repository, or the user's "recent files list". In this way, a user is presented with one or more documents that have triggered an inactivity threshold at a time when the user has finished one task and is looking to begin another.

In another embodiment, one or more documents that have triggered an inactivity threshold, or links thereto, are inserted into an email message. For example, the documents may be inserted into/appended to a list of documents attached to an email. If no actual documents are attached to an email, the promoted content would appear where attachments could be found. Additionally or alternatively, the documents may be referenced at the end of the email, similar to the word processing document embodiment discussed above.

In one embodiment, multichannel distribution is employed, using two or more of the above-mentioned techniques of content promotion. In this embodiment, when a user does interact with one of the channels, the content will no longer be promoted by the other channels.

Documents presented in the user's path of normal usage may be sorted or filtered based on the mechanism through which they are provided, the surrounding content, the urgency of viewing the documents, and the like. For example, one mechanism is to display a list of "documents to view next" at the end of a word processor. In this case, priority may be given to other word processing documents, due to the affinity between word processing documents and promoting documents in a word processor. Similarly, if the mechanism is embedding a list of "documents to view next" as attachments in an email application, higher priority may be assigned to a document that was originally distributed by email due to the affinity between email applications and a document that was originally distributed by email. For example, a word processing document that was distributed over email may be prioritized over a spreadsheet that was distributed over a document management system.

With regard to surrounding content, priority may be given to documents that were authored by or distributed by the author of the surrounding content. For example, if the user is viewing an email thread, and a number of documents are identified that the user has been inactive towards, and one of the documents was authored by or distributed by one of the participants in the email thread, that document will be prioritized. Similarly, priority may be given to documents that are referenced by the surrounding content. For example, an email reminding users to read a security bulletin may cause that security bulletin to be prioritized in the list of files to view next.

With regard to the urgency of viewing documents, documents may be listed in a priority order. The priority may be based inversely on a degree of difference between the inactivity of the user and the inactivity of the group. Additionally or alternatively, the priority may be based inversely on an amount of time left before an approaching deadline (i.e. a time closer to the deadline being more urgent).

This Summary is provided to introduce a selection of concepts in a simplified form that are further described below in the Detailed Description. This Summary is not intended to identify key or essential features of the claimed subject matter, nor is it intended to be used as an aid in determining the scope of the claimed subject matter. The term "techniques," for instance, may refer to system(s), method(s), computer-readable instructions, module(s), algorithms, hardware logic, and/or operation(s) as permitted by the context described above and throughout the document.

## BRIEF DESCRIPTION OF THE DRAWINGS

The Detailed Description is described with reference to the accompanying figures. In the figures, the left-most digit(s) of a reference number identifies the figure in which the reference number first appears. The same reference numbers in different figures indicate similar or identical items. References made to individual items of a plurality of items can use a reference number with a letter or a sequence of letters to refer to each individual item. Generic references to the items may use the specific reference number without the sequence of letters.

FIGURE 1 shows a plurality of users interacting with documents provided by a document management system.
FIGURE 2A shows an initial state of a table indicating who on a team of users has interacted with which of a plurality of documents.
FIGURE 2B shows a table indicating who on a team of users has engaged with which of a plurality of documents after some of the users have begun to interact with some of the documents.
FIGURE 2C shows a table indicating who on a team of users has engaged with which of a plurality of documents after one of the users has completed interacting with all of the documents.
FIGURE 2D shows a table indicating who on a team of users has engaged with which of a plurality of documents after most of the users have completed interacting with most of the documents.
FIGURE 3 shows a file open dialog in which content is being promoted in a recent documents list.
FIGURE 4 shows content being promoted at the bottom of a document as displayed in a word processing application.
FIGURE 5 shows content being promoted as an attachment to an email.
FIGURE 6 is a flow diagram of an example method for intelligent targeting of files needing attention.
FIGURE 7 is a computer architecture diagram illustrating an illustrative hardware and software architecture for a computing system capable of implementing aspects of the techniques and technologies presented herein.

## DETAILED DESCRIPTION

The following Detailed Description describes methods and systems for intelligent targeting of files needing attention.

As used herein, "content" refers to a document, spreadsheet, email, text message, web page, video, audio, image, or the like, or a portion thereof. The term "document" is used throughout this disclosure for brevity and clarity, but it is understood that other types of content are similarly contemplated.

As used herein, "interaction" refers to exposure to and/or modification of a piece of content by a user. The terms interaction and engagement may be used interchangeably. Interaction may be observed by noting that the user has opened a document. In other embodiments interaction may require observing that the user has scrolled through the document at a pace consistent with reading the document Interaction may be measured locally on a client computing device, or remotely by a server computer that provided the document for display.

As used herein, "inaction" refers to a failure to interact with, or the absence of interaction with, a piece of content.

As used herein, "patterns of inaction" refers to markedly lower levels of interaction with a plurality of documents as compared to an average level of interaction with the plurality of documents. Patterns of inaction are often measured in a number of standard deviations from levels of interaction observed by other members of a team.

As used herein, "document management system" refers to a piece of software, typically running on a server computer, used to track, manage and store documents.

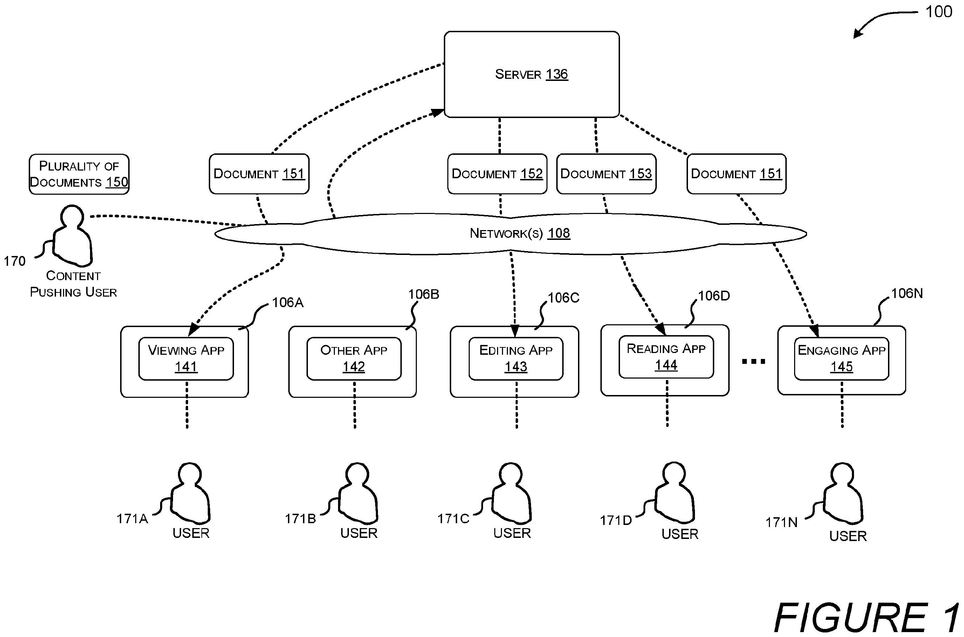

Turning now to FIGURE 1, illustrated are portions of a system 100 (also referred to herein as a "document management system") used to target files needing attention. In one embodiment, content pushing user 170 generates, identifies, collects, or otherwise bundles a plurality of documents 150 containing at least documents 151, 152, 153, and the like. Content pushing user 170 has targeted a team of users including user 171A, 171B, 171C, 171D, and 171N to distribute the documents to. Users 171A through 171N may be members of a product team, a family, a company, or any other organization of individuals. Each of Users 171A through 171N are operating one of computers 106A-106N, respectively, which are connected to server 136 through network 108.

In one embodiment, each of the users 171A through 171N is using an application on one of computers 106A through 106N to view or otherwise interact with one of documents 151-153. For example, user 171A is using viewing app 141 to view document 151. User 171B is using another app 142, but has not interacted with any of documents 151, 152, or 153. User 171C is using editing app 143 to edit document 152. User 171D is using reading app 144 to read document 153. A reading app may perform text-to-speech functionality and read the document out loud to the user. User 171N is using computer 106N to execute engaging app 145 to engage with document 151. As users 171A - 171N view, edit, or otherwise interact with documents 151 - 153, records of these interactions are stored and processed locally and/or by server 136 to identify users who have not interacted with a threshold percentage of documents.

In one embodiment, for each user, a percentage of documents that have been interacted with is calculated. In one embodiment, all types of interactions are given equal weight, such that viewing, editing, reading, commenting, and any other type of interaction is treated equally when determining the percentage. However, in another embodiment, types of interactions deemed more intense, e.g. editing or commenting, are given more weight.

In one embodiment, if one of the users 171A through 171N fails to interact with a threshold percentage of documents, that user may be targeted for content promotion as described herein. For example, if users 171A and 171C through 171N are determined to have interacted with an average of two-thirds ("2/3") of the plurality of documents 150, while user 171B is determined to have interacted with none of the documents, user 171B may be targeted for content promotion, and specifically for content promotion of documents 151-153.

In one embodiment, whether a threshold has been crossed beyond a certain standard deviation of inactivity, with a predefined confidence value, is determined when the following equation evaluates to a positive number (i.e. > 0):

$$I_\mu - Z\left(\frac{E}{\sqrt{n}}\right) - i_\mu > 0$$

Where:

- $I_\mu$ refers to the average content engagement for a user population - i.e. what is the total number of views divided by the total possible number of document views.

- Z refers to the normal distributed statistical score for a given confidence interval. For example, a statistical score could be calculated with a given confidence of 90%.

- E refers to $\sigma I$, the standard deviation ($\sigma$) of interactivity (I) of all users with respect to all documents.

- n refers to the number of users that have been asked to engage with the documents.

- $i_\mu$ refers to an average engagement for the chosen user - i.e. what percentage of the documents has a given user interacted with.

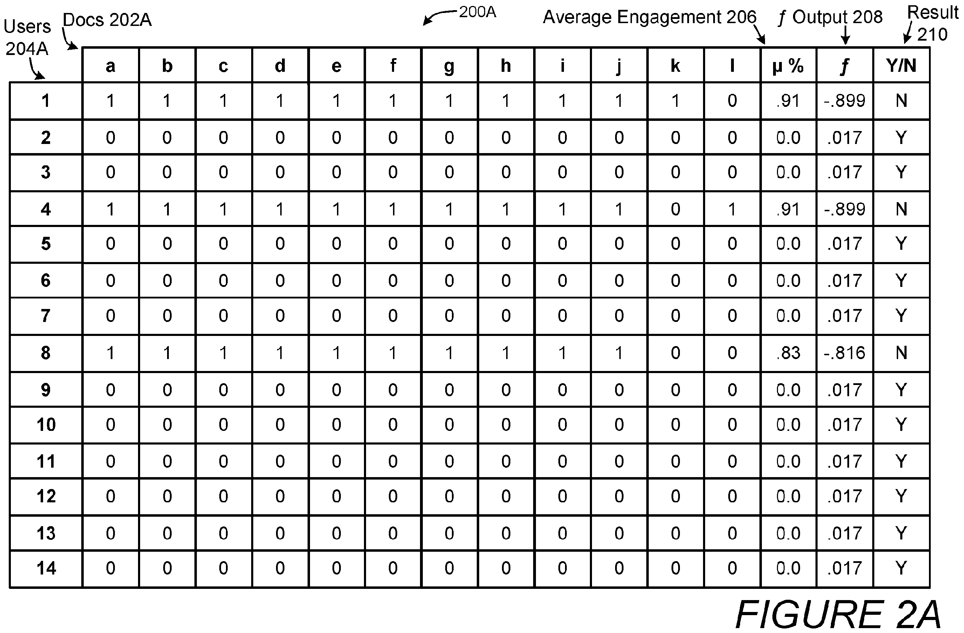

Turning now to FIGURE 2A, illustrated is a table 200A indicating which users 202A(A) - 202A(L) have interacted with which of a plurality of documents 204A(1)-204A(14). In one embodiment, the means by which the documents were interacted, or the number of times a document was interacted with, with is inconsequential, and so the interaction is recorded as a Boolean value: '1' indicating that the document was interacted with, while '0' indicates that it wasn't interacted with. In this embodiment, users 204A(1), 204A(4), and 204A(8) have interacted with most of the documents, as indicated by high average engagements 206A of 91%, 91%, and 83%, respectively. In contrast, the remaining users lag behind, having failed to engage with any documents. The number of documents and the number of users depicted in FIGURES 2A-2D is for illustrative purposes only, and many more or less documents and users are similarly contemplated.

By applying the equation discussed above with reference to FIGURE 1, the associated outputs are displayed in column 208A, with the decision whether to initiate prompting displayed in column 210A. In this example, users 204A(1), 204A(4), and 204A(8) have function outputs 208A that are negative (i.e. below zero), and so they will not be prompted. However, the remaining users, who have each fallen below the threshold based on the average number of documents they have viewed ($i_\mu$), each have function outputs 208A that are positive (i.e. greater than or equal to zero), and so they will begin receiving prompts as discussed below. This is but one embodiment, and users who have engaged with one or more documents may still be deemed sufficiently behind as to warrant a prompt, as discussed below. Having viewed zero documents is not a necessary or sufficient condition for triggering a prompt.

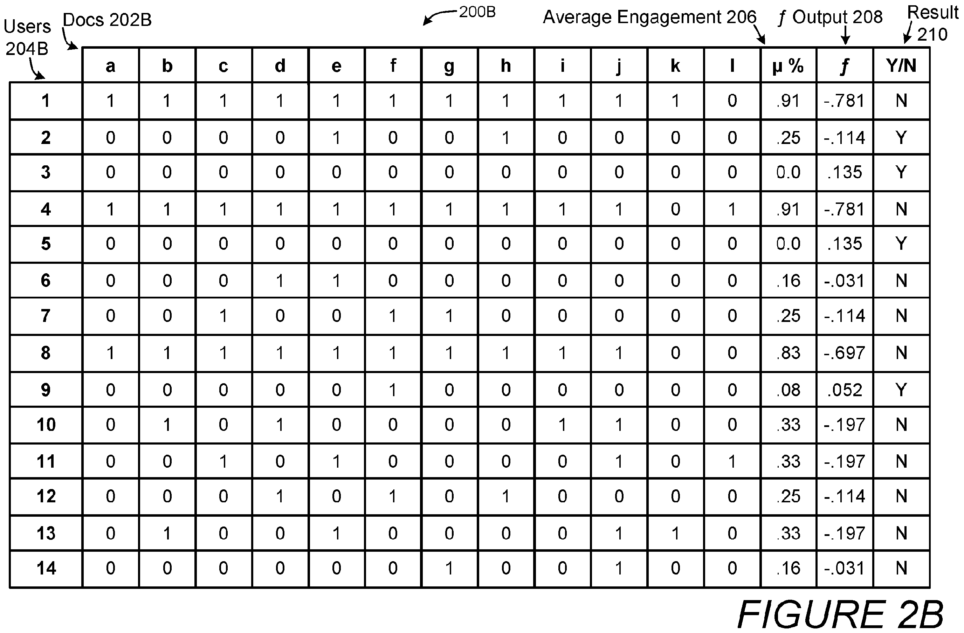

Turning now to FIGURE 2B, illustrated is a table 200B indicating which of a plurality of documents 204B(A)-204B(L) have been interacted with by which of a team of users 204B(1)-204B(14). This embodiment is a continuation of FIGURE 2A, as the users interact with additional documents. In this embodiment, enough users have begun to engage with enough documents that the number of users receiving prompting has reduced to 3, as indicated by columns 206B, 208B, and 210B. Specifically, for this example of users and their interactions, any user who has engaged with 16% of more of the documents is deemed to no longer receive prompting.

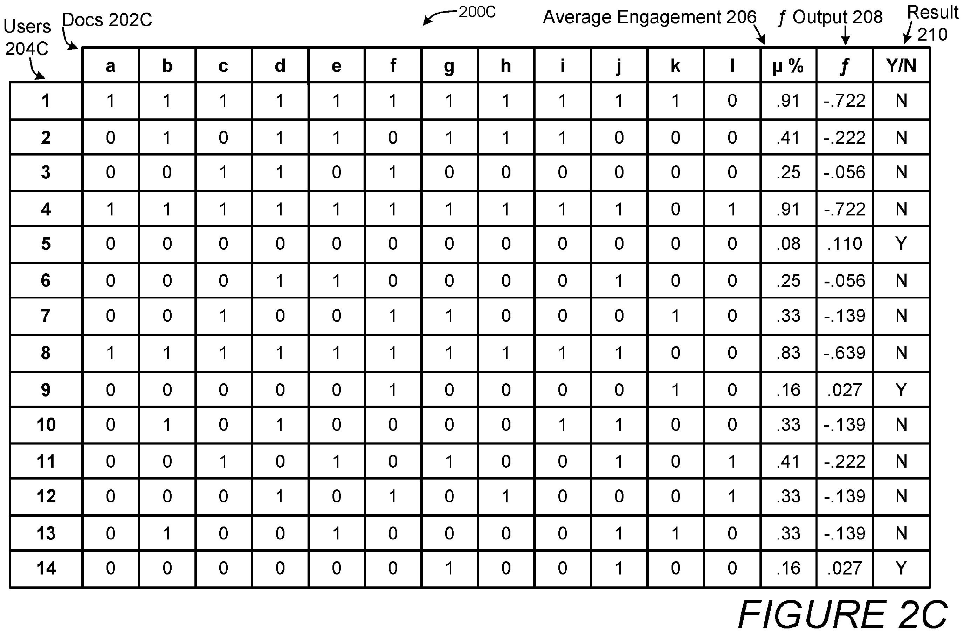

Turning now to FIGURE 2C, illustrated is a table 200C indicating which of a plurality of documents 204C(A)-204C(L) have been interacted with by which of a team of users 204C(1)-204C(14). This embodiment is a continuation of FIGURE 2B, as the users interact with additional documents. In this embodiment, user 204C(2) has, perhaps in response to content promotion triggered by the state of FIGURE 2B, interacted with 41% of the documents, up from 25% of documents in FIGURE 2B, and 0% of documents in FIGURE 2A. However, user 204C(14), who had stopped receiving prompting in FIGURE 2B, has fallen below the threshold and begun to receive prompting again. This has occurred even though user 204C(14) hasn't interacted with more or fewer documents. However, other members of the group have interacted with additional documents, changing the threshold, and so relative to the group, user 204C(14) has fallen below the new threshold, and as a result will receive prompting. In another embodiment, user 204C(14) may have interacted with additional documents and still fallen below the new threshold.

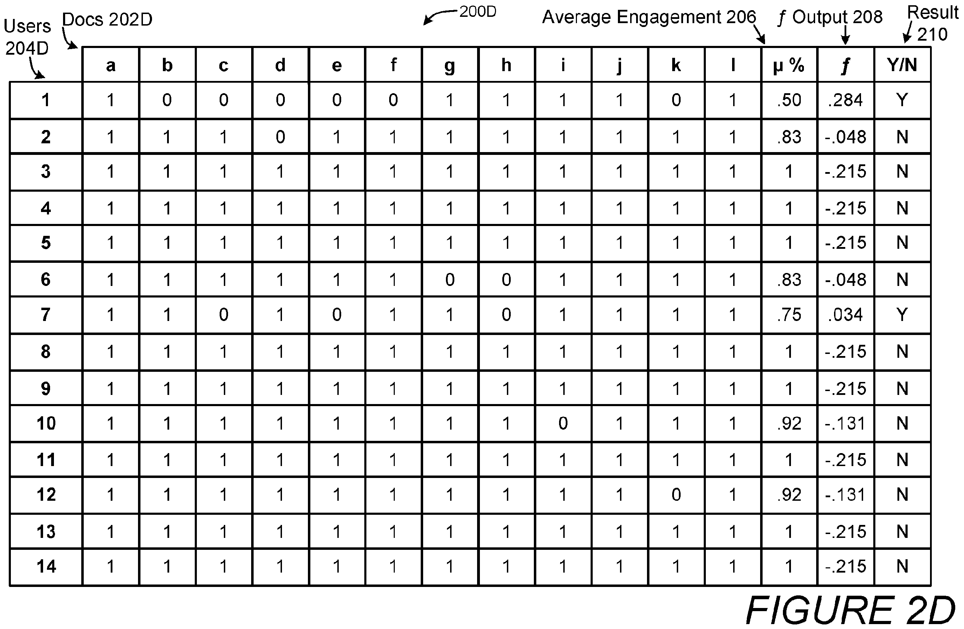

Turning now to FIGURE 2D, illustrated is a table 200D indicating which of a plurality of documents 204D(A)-204D(L) have been interacted with by which of a team of users 204D(1)-204D(14). This embodiment is a continuation of FIGURE 2C, as the users interact with additional documents. In this embodiment, all of the users have interacted with almost all of the documents. In this scenario, document promotion for the current plurality of documents is considered complete. However, in other embodiments, a 100% completion rate for all of the users may be necessary, while other definitions of a successful document promotion may include a smaller percentage of users having interacted with a smaller percentage of documents, e.g. 80% of users having interacted with at least 75% of the documents.

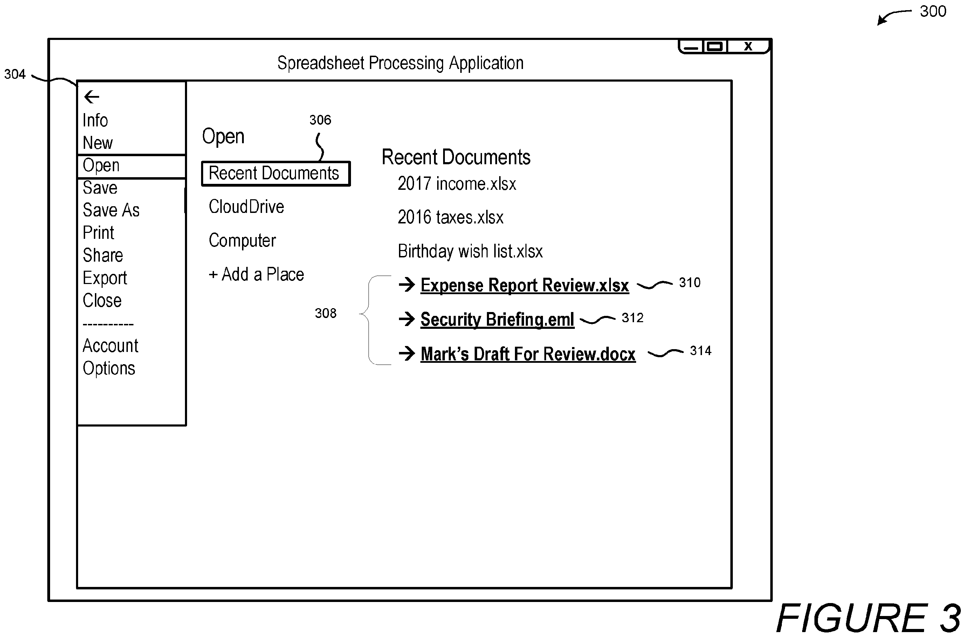

Turning now to FIGURE 3, illustrated is a spreadsheet processing application 300, including a file open dialog 304 in which documents 308 are being promoted in a recent documents list 306. In one embodiment, "Expense Report Review.xlsx" 310, "Security Briefing.eml" 312 and "Mark's Draft For Review.docx" 314 are appended to / inserted into the recent documents list 306. In this way, when a user is about to open a document, potentially to begin a new task, the user is reminded to open one of the promoted documents.

In one embodiment, the user is enabled to view why a document is included in the list, e.g. by hovering over the document to view statistics about the associated plurality of content, an approaching deadline, a request to edit the file, etc. Additionally or alternatively, "Expense Report Review.xlsx" is prioritized at the top of the list because the list is being displayed in a spreadsheet processing application and "Expense Report Review.xlsx" is a spreadsheet document.

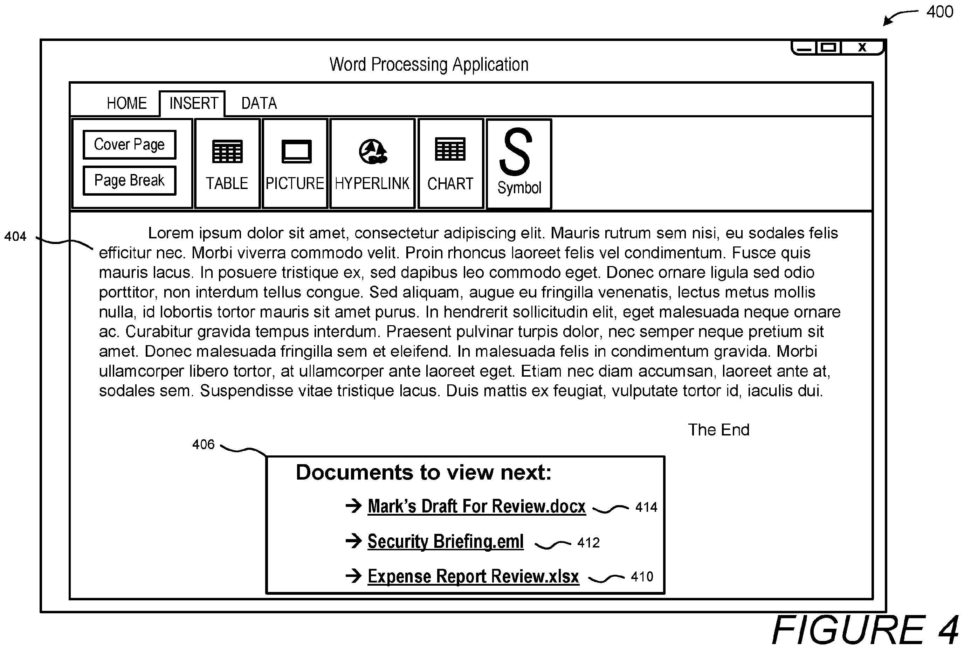

Turning now to FIGURE 4, illustrated is a word processing application 400, including a document 404 and a "documents to view next" promotion 406 displayed at the end of document 404. In this way, as a user finishes reading/editing document 404, other documents that haven't been read/edited are listed. For example, "Mark's draft for review.docx" 414, "Security briefing.eml" 412 and "Expense report review.xlsx" 410 are listed for convenient access by a user who has just finished reading document 404. In one embodiment, "Mark's draft for review.docx" 414 is given priority (e.g. is listed first) based on the affinity between the document type (".docx") and the application type (word processor).

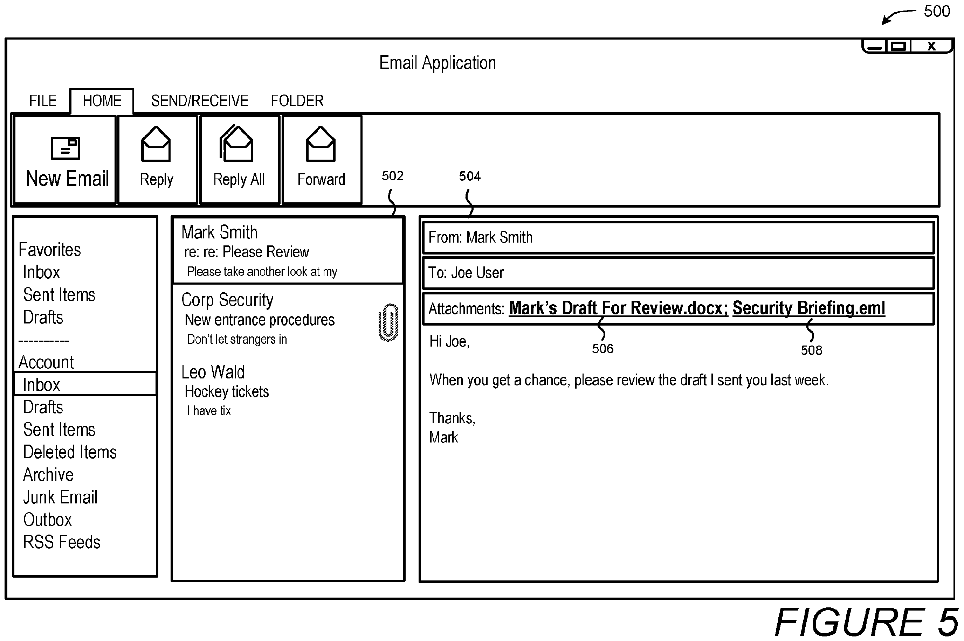

Turning now to FIGURE 5, illustrated is an email application 500 including inbox 502 and email message 504. Email message 504 includes a list of attachments, which in this case have been populated by promoted documents, e.g. "Mark's draft for review.docx" 506 and "Security briefing.eml" 508. i.e. "Mark's draft for review.docx" 506 and "Security briefing.eml" 508 are not traditional attachments, however these promoted documents may be listed along-side actual attachments.

In this illustration, email message 504 is one of a chain of emails in which Mark Smith has asked Joe User to review a draft document. Of all the documents that could have been promoted, "Mark's Draft For Review.docx" is at the top because the author of the email ("Mark Smith") is also the author of "Mark's Draft For Review.docx". In another embodiment, "Mark's Draft For Review.docx" is prioritized because it had been attached to an email in the thread.

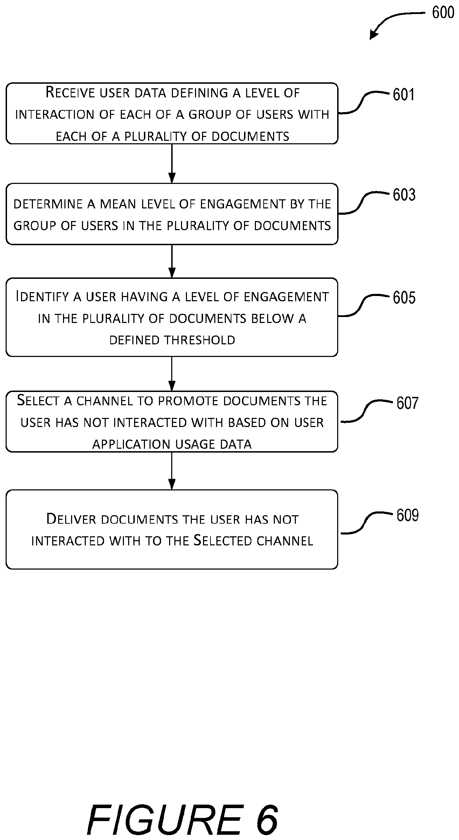

FIGURE 6 is a flow diagram of an example method 600 for intelligent targeting of files needing attention. It should be understood by those of ordinary skill in the art that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, performed together, and/or performed simultaneously, without departing from the scope of the appended claims.

At block 601, a system (e.g., server 136) receives user data defining a level of interaction of each of a group of users with each of a plurality of documents. Examples of this type of data are depicted in FIGURES 2A-2D. The level of interaction may refer to a percentage of documents that have been interacted with, e.g. column 206A, where each interaction is treated equally, regardless of the type or frequency or duration of the interaction. However, a degree of interaction may, in another embodiment, be considered when determining a level of interaction, which may in turn affect whether a user is deemed to have engaged with the plurality of documents enough to avoid being prompted. For example, a document that was edited may be deemed interacted with to a greater degree than a document that was merely read. Similarly, a document that was scrolled through slowly, at a reading pace, may be deemed interacted with to a greater degree than a document that was skimmed or merely opened without being scrolled.

In one embodiment user data is captured by applications executing on a user's client device. For example, spreadsheet processing application 300, word processing application 400, or email application 500 may note when a document has been interacted with and/or the extent to which the document has been interacted with, and report data indicating as much to server 136. Additionally or alternatively, the user interaction data is captured by server 136 as documents are downloaded for display on a user's client computer, or as documents with modifications are uploaded from the user's client computer to server 136.

In one embodiment, the plurality of documents includes a new set of manuals for a flight deck of an airline crew. For example, there are 10 documents in the plurality of documents, and there are 20 pilots who work for the particular airline. Data received at block 601 indicates which of the pilots have reviewed which of the new set of manuals, with the goal of determining what documents haven't been interacted with and/or what people haven't interacted with the set of manuals.

At block 603, a threshold level of engagement by the group of users is determined for the plurality of documents. In one embodiment, the threshold is determined by calculating the $I_\mu - Z\left(\frac{E}{\sqrt{n}}\right)$ terms of the equation discussed above in conjunction with FIGURE 1.

First, the group interactivity score $I_\mu$ may be calculated by dividing the number of document views by any of the team members by the number of potential document views. For example, if half of a team has viewed half of the documents, then $I_\mu = 25\%$.

Next, the $Z\left(\frac{E}{\sqrt{n}}\right)$ term is calculated. In one embodiment, the threshold level of engagement is determined to a given confidence level, e.g. to a 90% confidence level. The confidence level can be used to determine $Z$, an area under the standard normal curve that corresponds that confidence level (e.g. 1.64 for 90%). $Z$ is multiplied by the standard deviation E of the number of views of each user, and divided by the square root of the number of users.

In one embodiment, the result of $I_\mu - Z\left(\frac{E}{\sqrt{n}}\right)$ is the threshold value applied below to determine if an individual user should be prompted to view additional documents.

At block 605, a user having a level of interaction in the plurality of documents below the defined threshold is identified. In other words, a user lagging behind his or her peers in interacting with the plurality of documents is identified. In one embodiment the user is identified when the user's engagement with the plurality of content is statistically significantly different from other users' interactions. In one embodiment, the average engagement for a given user is subtracted from the threshold defined above in conjunction with block 603. In one embodiment, if the result is greater than or equal to zero, the user is deemed to lag other team members enough to warrant prompting. However, if the result is less than zero, the user is deemed to have viewed a sufficient number of documents that prompting is to be avoided.

One goal of the various embodiments is to avoid promoting content to a user for small or transient differences in engagement. For example, it may be that some, even many, of the users in the group respond to the initial presentation of the plurality of documents. Without safeguards, a user who did not immediately review the documents could be targeted, when instead an initial amount of time should be allowed to pass before contacting the user.

For example, if the group of users is typically located in a given time zone, but one of the users has been determined to be traveling, based on IP address, GPS data, calendar schedule information, or the like, that user may be compared against a threshold calculated based on a higher confidence level. Additionally or alternatively, the analysis may be delayed for users in other time zones so as to normalize when in the day the threshold comparison is made - e.g. everyone is evaluated at noon in their current time zone.

At block 607, a channel to promote documents the user has not interacted with is determined based on user application data. Continuing the example above, if 8 of the 10 pilots have great engagement, e.g. over 85% engagement, but two of the pilots have little to no engagement, one or more content channels are selected to promote documents that haven't been interacted with by the two pilots. In one embodiment, a channel for promotion is selected based on observations of how the target user spends his/her time. For example, if one of the user spends most of his/her time in email, the technique to engage with the user while in an email application may be selected. See, e.g., FIGURE 5. However if the user spends most of his/her time using a web browser, mobile application or Microsoft Excel, content can be promoted in the appropriate channel, i.e. the user's email application, the user's web browser, or the user's Microsoft Excel application, as appropriate. In one embodiment, content can be promoted in a multitude of websites, applications, mobile apps, digital assistants, or the like.

At block 609, the documents which have not been interacted with are promoted over the one or more selected channels, as discussed above in conjunction with FIGURES 3-5. When a channel including links to open one or more promoted documents is displayed to a user, the user may click on or otherwise activate the links. When activated, a link may open the promoted content in another application window, another tab, or by opening the document in the application displaying the promoted content. As content is interacted with, tables such as discussed in conjunction with FIGURES 2A-2D are updated, and a new calculation of which documents to promote may be performed.

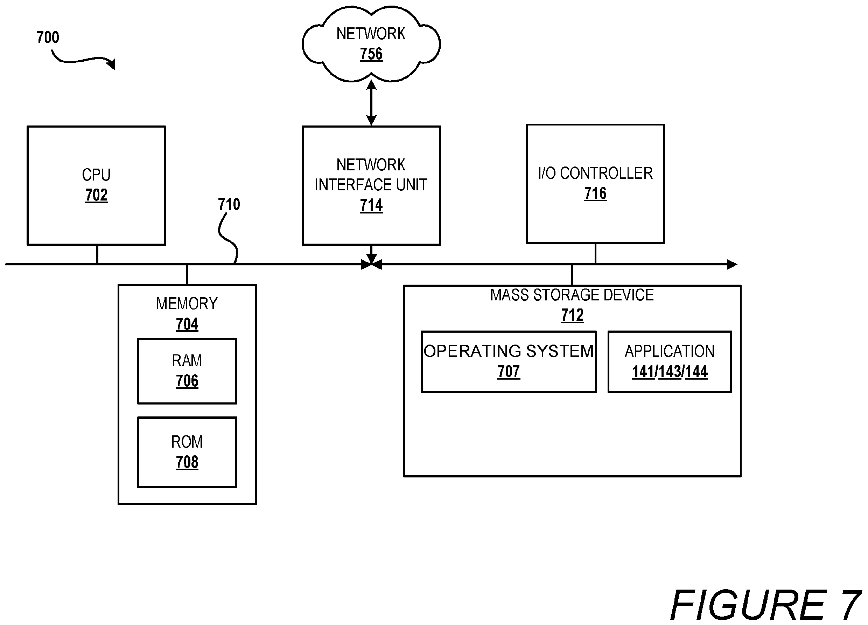

FIGURE 7 is a computer architecture diagram that shows an architecture for a computer 700, e.g., the computers 106A-106N and/or server 136, capable of executing the software components described herein. The architecture illustrated in FIGURE 7 is an architecture for a server computer, mobile phone, an e-reader, a smart phone, a desktop computer, a netbook computer, a tablet computer, a wearable device, a laptop computer, or another type of computing device suitable for executing the software components presented herein.

FIGURE 7 shows additional details of an example computer architecture 700 for a computer, such as computers 106A-106N and the server 136 (FIGURE 1), capable of executing the program components described herein. Thus, the computer architecture 700 illustrated in FIGURE 7 illustrates an architecture for a server computer, a mobile phone, a PDA, a smart phone, a desktop computer, a netbook computer, a tablet computer, and/or a laptop computer. The computer architecture 700 may be utilized to execute any aspects of the software components presented herein.

The computer architecture 700 illustrated in FIGURE 7 includes a central processing unit 702 ("CPU"), a system memory 704, including a random access memory 706 ("RAM") and a read-only memory ("ROM") 708, and a system bus 710 that couples the memory 704 to the CPU 702. A basic input/output system containing the basic routines that help to transfer information between elements within the computer architecture 700, such as during startup, is stored in the ROM 708. The computer architecture 700 further includes a mass storage device 712 for storing an operating system 707, other data, and one or more application programs 141, 143, and 144.

The mass storage device 712 is connected to the CPU 702 through a mass storage controller (not shown) connected to the bus 710. The mass storage device 712 and its associated computer-readable media provide non-volatile storage for the computer architecture 700. Although the description of computer-readable media contained herein refers to a mass storage device, such as a solid state drive, a hard disk or CD-ROM drive, it should be appreciated by those skilled in the art that computer-readable media can be any available computer storage media or communication media that can be accessed by the computer architecture 700.

Communication media includes computer readable instructions, data structures, program modules, or other data in a modulated data signal such as a carrier wave or other transport mechanism and includes any delivery media. The term "modulated data signal" means a signal that has one or more of its characteristics changed or set in a manner so as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer media includes, but is not limited to, RAM, ROM, EPROM, EEPROM, flash memory or other solid-state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the computer architecture 700. For purposes of the claims, the phrase "computer storage medium," "computer-readable storage medium" and variations thereof, does not include waves, signals, and/or other transitory and/or intangible communication media, per se.

According to various configurations, the computer architecture 700 may operate in a networked environment using logical connections to remote computers through the network 756 and/or another network (not shown). The computer architecture 700 may connect to the network 756 through a network interface unit 714 connected to the bus 710. It should be appreciated that the network interface unit 714 also may be utilized to connect to other types of networks and remote computer systems. The computer architecture 700 also may include an input/output controller 716 for receiving and processing input from a number of other devices, including a keyboard, mouse, or electronic stylus (not shown in FIGURE 7). Similarly, the input/output controller 716 may provide output to a display screen, a printer, or other type of output device (also not shown in FIGURE 7).

It should be appreciated that the software components described herein may, when loaded into the CPU 702 and executed, transform the CPU 702 and the overall computer architecture 700 from a general-purpose computing system into a special-purpose computing system customized to facilitate the functionality presented herein. The CPU 702 may be constructed from any number of transistors or other discrete circuit elements, which may individually or collectively assume any number of states. More specifically, the CPU 702 may operate as a finite-state machine, in response to executable instructions contained within the software modules disclosed herein. These computer-executable instructions may transform the CPU 702 by specifying how the CPU 702 transitions between states, thereby transforming the transistors or other discrete hardware elements constituting the CPU 702.

Encoding the software modules presented herein also may transform the physical structure of the computer-readable media presented herein. The specific transformation of physical structure may depend on various factors, in different implementations of this description. Examples of such factors may include, but are not limited to, the technology used to implement the computer-readable media, whether the computer-readable media is characterized as primary or secondary storage, and the like. For example, if the computer-readable media is implemented as semiconductor-based memory, the software disclosed herein may be encoded on the computer-readable media by transforming the physical state of the semiconductor memory. For example, the software may transform the state of transistors, capacitors, or other discrete circuit elements constituting the semiconductor memory. The software also may transform the physical state of such components in order to store data thereupon.

As another example, the computer-readable media disclosed herein may be implemented using magnetic or optical technology. In such implementations, the software presented herein may transform the physical state of magnetic or optical media, when the software is encoded therein. These transformations may include altering the magnetic characteristics of particular locations within given magnetic media. These transformations also may include altering the physical features or characteristics of particular locations within given optical media, to change the optical characteristics of those locations. Other transformations of physical media are possible without departing from the scope of the present description, with the foregoing examples provided only to facilitate this discussion.

In light of the above, it should be appreciated that many types of physical transformations take place in the computer architecture 700 in order to store and execute the software components presented herein. It also should be appreciated that the computer architecture 700 may include other types of computing devices, including hand-held computers, embedded computer systems, personal digital assistants, and other types of computing devices known to those skilled in the art. It is also contemplated that the computer architecture 700 may not include all of the components shown in FIGURE 7, may include other components that are not explicitly shown in FIGURE 7, or may utilize an architecture completely different than that shown in FIGURE 7.

In closing, although the various configurations have been described in language specific to structural features and/or methodological acts, it is to be understood that the subject matter defined in the appended representations is not necessarily limited to the specific features or acts described. Rather, the specific features and acts are disclosed as example forms of implementing the claimed subject matter.

## Claims

1. A computer-implemented method for intelligent targeting of files needing attention for the purpose of increasing a percentage of a plurality of files interacted with by a group of users, the method comprising:

   receiving (601) data indicating whether each of the group of users has interacted with each of the plurality of documents;
   determining the percentage of documents that each of the group of users has interacted with based on the received data;
   calculating an average of the percentages;
   calculating a standard deviation of the percentages;
   identifying (605) a user of the group of users that has interacted with a smaller percentage of the plurality of documents than a defined threshold, wherein the threshold is the average of the percentages minus a normal distributed statistical score for a confidence interval;

selecting (607) a channel over which to promote a document that the user has not interacted with, wherein the channel includes a location within an application used by the user;

displaying in the location within the application a list of links including the document that the user has not interacted with;

receiving an activation of the link; and

opening the document that the user has not interacted with in response to the activation of the link,

wherein the threshold is determined based on the equation $I_\mu - Z\left(\frac{E}{\sqrt{n}}\right)$, wherein $I_\mu$ refers to the average number of documents interacted with by the group of users, wherein $Z\left(\frac{E}{\sqrt{n}}\right)$ refers to the normal distributed statistical score for the confidence interval, wherein Z refers to an area under a standard normal curve corresponding to the confidence interval, wherein E refers to a standard deviation of documents interacted with by users of the group, and wherein $\sqrt{n}$ refers to a square root of a number of users in the group of users.

2. The method of claim 1, wherein the confidence interval is 90%.

3. The method of any one of claims 1-2, wherein identifying a user of the group of users is based on subtracting the percentage of documents viewed by the user from the threshold.

4. The method of any one of claims 1-3, wherein the document includes any type of content, including spreadsheet, email, website, audio, video, and digital assistant.

5. A computing device for targeting of files needing attention for the purpose of increasing a percentage of a plurality of files interacted with by a group of users, the computing device comprising:

one or more processors;

a memory in communication with the one or more processors, the memory having computer-readable instructions stored thereupon which, when executed by the one or more processors, cause the computing device to:

receive (601) data indicating whether each of a group of users has interacted with each of a plurality of documents;

determine a percentage of documents that each of the group of users has interacted with based on the received data;

calculate an average of the percentages;

calculate a standard deviation of the percentages;

identify (605) a user of the group of users that has interacted with a smaller percentage of the plurality of documents than a defined threshold, wherein the threshold is the average of the percentages minus a normal distributed statistical score for a confidence interval;

select (607) a channel over which to promote a document that the user has not interacted with, wherein the channel includes a location within an application used by the user;

display in the location within the application a list of links including the document that the user has not interacted with;

receive an activation of the link; and

open the document that the user has not interacted with in response to the activation of the link,

wherein the threshold is determined based on the equation $I_\mu - Z\left(\frac{E}{\sqrt{n}}\right)$, wherein $I_\mu$ refers to the average number of documents interacted with by the group of users, wherein $Z\left(\frac{E}{\sqrt{n}}\right)$ refers to the normal distributed statistical score for the confidence interval, wherein Z refers to an area under a standard normal curve corresponding to the confidence interval, wherein E refers to a standard deviation of documents interacted with by users of the group, and wherein $\sqrt{n}$ refers to a square root of a number of users in the group of users.

6. The computing device of claim 5, wherein the user of the group of users is identified based on a request sent to another user, wherein the request to the other user includes a document, and wherein the request to the other user is associated with a deadline.

7. The computing device of any one of claims 5-6, wherein the channel includes an area at the bottom of a document.

8. The computing device of claim 7 wherein the channel includes an entry added to a file list.

9. The computing device of claim 8, wherein the file list includes a file folder, a recently opened files list, or an email attachment list.

10. The computing device of claim 6, wherein the list of links is in-line with another list in the document, and wherein the list of links is visually distinguished from the other list in the document.

11. A computer-readable medium having stored computer-executable instructions that, when executed by a processor, cause the processor to perform a method for intelligent targeting of files needing attention, the method comprising:

   receiving (601) data indicating whether each of a group of users has interacted with each of a plurality of documents;
   determining a percentage of documents that each of the group of users has interacted with based on the received data;
   calculating an average of the percentages;
   calculating a standard deviation of the percentages;
   identifying (605) a user of the group of users that has interacted with a smaller percentage of the plurality of documents than a defined threshold, wherein the threshold is the average of the percentages minus a normal distributed statistical score for a confidence interval;
   selecting (607) a channel over which to promote a document that the user has not interacted with, wherein the channel includes a location within an application used by the user;
   displaying in the location within the application a list of links including the document that the user has not interacted with;
   receiving an activation of the link; and
   opening the document that the user has not interacted with in response to the activation of the link,
   wherein the threshold is determined based on the equation $I_\mu - Z\left(\frac{E}{\sqrt{n}}\right)$, wherein $I_\mu$ refers to the average number of documents interacted with by the group of users, wherein $Z\left(\frac{E}{\sqrt{n}}\right)$ refers to the normal distributed statistical score for the confidence interval, wherein $Z$ refers to an area under a standard normal curve corresponding to the confidence interval, wherein $E$ refers to a standard deviation of documents interacted with by users of the group, and wherein $\sqrt{n}$ refers to a square root of a number of users in the group of users.

12. The computer-readable medium of claim 11, wherein the list of links is prioritized based on a surrounding content in the application where the list of links is displayed.

13. The computer-readable medium of any one of claims 11-12, wherein the list of links is prioritized based on an urgency, wherein the urgency is proportional to a proximity of a pending deadline.

**Patentansprüche**

1. Computerimplementiertes Verfahren zum intelligenten Zielen auf Dateien, die der Aufmerksamkeit bedürfen, zum Zwecke des Erhöhens eines Prozentsatzes einer Vielzahl von Dateien, mit denen eine Gruppe von Benutzern interagiert, wobei das Verfahren umfasst:

   Empfangen (601) von Daten, die angeben, ob jeder der Gruppe von Benutzern mit jedem der Vielzahl von Dokumenten interagiert hat;
   Bestimmen, auf Grundlage der empfangenen Daten, des Prozentsatzes von Dokumenten, mit denen jeder der Gruppe von Benutzern interagiert hat;
   Berechnen eines Durchschnitts der Prozentsätze;
   Berechnen einer Standardabweichung der Prozentsätze;
   Identifizieren (605) eines Benutzers der Gruppe von Benutzern, der mit einem kleineren Prozentsatz der Vielzahl von Dokumenten interagiert hat als eine vorbestimmte Schwelle, wobei die Schwelle der Durchschnitt der Prozentsätze minus eines normal verteilten statistischen Werts für ein Konfidenzintervall ist;
   Auswählen (607) eines Kanals, über den ein Dokument, mit dem der Benutzer nicht interagiert hat, zu fördern ist, wobei der Kanal eine Stelle innerhalb einer von dem Benutzer verwendeten Anwendung beinhaltet;
   Anzeigen, in der Stelle innerhalb der Anwendung, einer Liste von Links, die das Dokument, mit dem der Benutzer nicht interagiert hat, beinhaltet;
   Empfangen einer Aktivierung des Links; und
   Öffnen des Dokuments, mit dem der Benutzer nicht interagiert hat, als Reaktion auf die Aktivierung des Links,
   wobei die Schwelle auf Grundlage der Gleichung $I_\mu - Z(\frac{E}{\sqrt{n}})$ bestimmt wird, wobei sich $I_\mu$ auf die durchschnittliche Anzahl von Dokumenten, mit denen die Gruppe von Benutzern interagiert hat, bezieht, wobei sich $Z(\frac{E}{\sqrt{n}})$ auf den normal verteilten statistischen Wert für das Konfidenzintervall bezieht, wobei sich Z auf eine Fläche unter der Standardnormalkurve bezieht, die dem Konfidenzintervall entspricht, wobei sich *E* auf eine Standardabweichung von Dokumenten, mit denen Benutzer der Gruppe interagiert haben, bezieht, und wobei sich $\sqrt{n}$ auf eine Quadratwurzel einer Anzahl von Benutzern in der Gruppe von Benutzern bezieht.

2. Verfahren nach Anspruch 1, wobei das Konfidenzintervall 90% beträgt.

3. Verfahren nach einem der Ansprüche 1-2, wobei das Identifizieren eines Benutzers der Gruppe von Benutzern auf dem Subtrahieren des Prozentsatzes von Dokumenten, die von dem Benutzer gesichtet werden, von der Schwelle basiert.

4. Verfahren nach einem der Ansprüche 1-3, wobei das Dokument eine jegliche Art von Inhalt, einschließlich Kalkulationstabelle, E-Mail, Webseite, Audio, Video und digitalem Assistenten, beinhaltet.

5. Rechenvorrichtung zum intelligenten Zielen auf Dateien, die der Aufmerksamkeit bedürfen, zum Zwecke des Erhöhens eines Prozentsatzes einer Vielzahl von Dateien, mit denen eine Gruppe von Benutzern interagiert, wobei die Rechenvorrichtung umfasst:

einen oder mehrere Prozessoren;
einen Speicher in Kommunikation mit dem einen oder den mehreren Prozessoren, wobei der Speicher computerlesbare Anweisungen darauf gespeichert aufweist, die, wenn sie von dem einen oder den mehreren Prozessoren ausgeführt werden, die Rechenvorrichtung zu Folgendem veranlassen:

Empfangen (601) von Daten, die angeben, ob jeder einer Gruppe von Benutzern mit jedem einer Vielzahl von Dokumenten interagiert hat;
Bestimmen, auf Grundlage der empfangenen Daten, eines Prozentsatzes von Dokumenten, mit denen jeder der Gruppe von Benutzern interagiert hat;
Berechnen eines Durchschnitts der Prozentsätze;
Berechnen einer Standardabweichung der Prozentsätze;
Identifizieren (605) eines Benutzers der Gruppe von Benutzern, der mit einem kleineren Prozentsatz der Vielzahl von Dokumenten interagiert hat als eine vorbestimmte Schwelle, wobei die Schwelle der Durchschnitt der Prozentsätze minus eines normal verteilten statistischen Werts für ein Konfidenzintervall ist;
Auswählen (607) eines Kanals, über den ein Dokument, mit dem der Benutzer nicht interagiert hat, zu fördern ist, wobei der Kanal eine Stelle innerhalb einer von dem Benutzer verwendeten Anwendung beinhaltet;
Anzeigen, in der Stelle innerhalb der Anwendung, einer Liste von Links, die das Dokument, mit dem der Benutzer nicht interagiert hat, beinhaltet;
Empfangen einer Aktivierung des Links; und
Öffnen des Dokuments, mit dem der Benutzer nicht interagiert hat, als Reaktion auf die Aktivierung des Links,
wobei die Schwelle auf Grundlage der Gleichung $I_\mu - Z(\frac{E}{\sqrt{n}})$ bestimmt wird, wobei sich $I_\mu$ auf die durchschnittliche Anzahl von Dokumenten, mit denen die Gruppe von Benutzern interagiert hat, bezieht, wobei sich $Z(\frac{E}{\sqrt{n}})$ auf den normal verteilten statistischen Wert für das Konfidenzintervall bezieht, wobei sich Z auf eine Fläche unter der Standardnormalkurve bezieht, die dem Konfidenzintervall entspricht, wobei sich *E* auf eine Standardabweichung von Dokumenten, mit denen Benutzer der Gruppe interagiert haben, bezieht, und wobei sich $\sqrt{n}$ auf eine Quadratwurzel einer Anzahl von Benutzern in der Gruppe von Benutzern bezieht.

6. Rechenvorrichtung nach Anspruch 5, wobei der Benutzer der Gruppe von Benutzern auf Grundlage einer an einen anderen Benutzer gesendeten Anfrage identifiziert wird, wobei die Anfrage an den anderen Benutzer ein Dokument beinhaltet und wobei die Anfrage an den anderen Benutzer mit einem Fristende verknüpft ist.

7. Rechenvorrichtung nach einem der Ansprüche 5-6, wobei der Kanal eine Fläche am Ende des Dokuments beinhaltet.

8. Rechenvorrichtung nach Anspruch 7, wobei der Kanal einen zu einer Dateiliste hinzugefügten Eintrag beinhaltet.

9. Rechenvorrichtung nach Anspruch 8, wobei die Dateiliste einen Dateiordner, eine Liste kürzlich geöffneter Dateien oder eine Liste von E-Mail-Anhängen beinhaltet.

**10.** Rechenvorrichtung nach Anspruch 6, wobei die Liste von Links in-line mit einer anderen Liste im Dokument ist und wobei die Liste von Links optisch von der anderen Liste im Dokument verschieden ist.

**11.** Computerlesbares Medium, auf dem computerausführbare Anweisungen speichert sind, die, wenn sie von einem Prozessor ausgeführt werden, den Prozessor veranlassen, ein Verfahren zum Zielen auf Dateien, die der Aufmerksamkeit bedürfen, durchzuführen, wobei das Verfahren Folgendes umfasst:

> Empfangen (601) von Daten, die angeben, ob jeder einer Gruppe von Benutzern mit jedem einer Vielzahl von Dokumenten interagiert hat;
> Bestimmen, auf Grundlage der empfangenen Daten, eines Prozentsatzes von Dokumenten, mit denen jeder der Gruppe von Benutzern interagiert hat;
> Berechnen eines Durchschnitts der Prozentsätze;
> Berechnen einer Standardabweichung der Prozentsätze;
> Identifizieren (605) eines Benutzers der Gruppe von Benutzern, der mit einem kleineren Prozentsatz der Vielzahl von Dokumenten interagiert hat als eine vorbestimmte Schwelle, wobei die Schwelle der Durchschnitt der Prozentsätze minus eines normal verteilten statistischen Werts für ein Konfidenzintervall ist;
> Auswählen (607) eines Kanals, über den ein Dokument, mit dem der Benutzer nicht interagiert hat, zu fördern ist, wobei der Kanal eine Stelle innerhalb einer von dem Benutzer verwendeten Anwendung beinhaltet;
> Anzeigen, in der Stelle innerhalb der Anwendung, einer Liste von Links, die das Dokument, mit dem der Benutzer nicht interagiert hat, beinhaltet;
> Empfangen einer Aktivierung des Links; und Öffnen des Dokuments, mit dem der Benutzer nicht interagiert hat, als Reaktion auf die Aktivierung des Links,
>
> wobei die Schwelle auf Grundlage der Gleichung $I_\mu - Z(\frac{E}{\sqrt{n}})$ bestimmt wird, wobei sich $I_\mu$ auf die durchschnittliche Anzahl von Dokumenten, mit denen die Gruppe von Benutzern interagiert hat, bezieht, wobei sich $Z(\frac{E}{\sqrt{n}})$ auf den normal verteilten statistischen Wert für das Konfidenzintervall bezieht, wobei sich Z auf eine Fläche unter der Standardnormalkurve bezieht, die dem Konfidenzintervall entspricht, wobei sich E auf eine Standardabweichung von Dokumenten, mit denen Benutzer der Gruppe interagiert haben, bezieht, und wobei sich $\sqrt{n}$ auf eine Quadratwurzel einer Anzahl von Benutzern in der Gruppe von Benutzern bezieht.

**12.** Computerlesbares Medium nach Anspruch 11, wobei die Liste von Links auf Grundlage eines umgebenden Inhalts in der Anwendung, in der die Liste von Links angezeigt wird, priorisiert wird.

**13.** Computerlesbares Medium nach einem der Ansprüche 11-12, wobei die Liste von Links auf Grundlage einer Dringlichkeit priorisiert wird, wobei die Dringlichkeit proportional zu einer Nähe eines aufkommenden Fristendes ist.

**Revendications**

**1.** Procédé mis en oeuvre par ordinateur pour un ciblage intelligent de fichiers nécessitant l'attention dans le but d'augmenter un pourcentage d'une pluralité de fichiers avec lesquels un groupe d'utilisateurs interagit, le procédé comprenant les étapes consistant à :

> recevoir (601) des données indiquant si chaque membre du groupe d'utilisateurs a interagi avec chacun de la pluralité des documents ;
> déterminer le pourcentage de documents avec lequel chaque groupe d'utilisateurs a interagi sur la base des données reçues ;
> calculer une moyenne des pourcentages ;
> calculer un écart-type des pourcentages ;
> identifier (605) un utilisateur du groupe d'utilisateurs qui a interagi avec un pourcentage de la pluralité de documents inférieur à un seuil défini, dans lequel le seuil est la moyenne des pourcentages moins un score statistique distribué normalement pour un intervalle de confiance ;
> sélectionner (607) un canal sur lequel promouvoir un document avec lequel l'utilisateur n'a pas interagi, dans lequel le canal inclut un emplacement au sein d'une application utilisée par l'utilisateur ;
> afficher dans l'emplacement au sein de l'application une liste de liens incluant le document avec lequel l'utilisateur n'a pas interagi ;
> recevoir une activation du lien ; et
> ouvrir le document avec lequel l'utilisateur n'a pas interagi en réponse à l'activation du lien,
>
> dans lequel le seuil est déterminé sur la base de l'équation $I_\mu - Z(\frac{E}{\sqrt{n}})$ dans laquelle $I_\mu$ se réfère au nombre moyen de documents avec lesquels le groupe d'utilisateurs a interagi, dans

laquelle $Z(\frac{E}{\sqrt{n}})$ se réfère au score statistique distribué normalement pour l'intervalle de confiance, dans laquelle Z se réfère à une zone sous une courbe normale standard correspondant à l'intervalle de confiance, dans laquelle E se réfère à un écart type des documents avec lesquels les utilisateurs du groupe ont interagi, et dans laquelle $\sqrt{n}$ se réfère à une racine carrée d'un nombre d'utilisateurs dans le groupe d'utilisateurs.

2. Procédé selon la revendication 1, dans lequel l'intervalle de confiance est de 90 %.

3. Procédé selon l'une quelconque des revendications 1 à 2, dans lequel l'identification d'un utilisateur du groupe d'utilisateurs est basée sur la soustraction du pourcentage de documents consultés par l'utilisateur du seuil.

4. Procédé selon l'une quelconque des revendications 1 à 3, dans lequel le document inclut tout type de contenu, incluant des feuilles de calcul, des courriers électroniques, des sites web, des fichiers audio et vidéo et des assistants numériques.

5. Dispositif de calcul pour un ciblage de fichiers nécessitant l'attention dans le but d'augmenter un pourcentage d'une pluralité de fichiers avec lesquels un groupe d'utilisateurs interagit, le dispositif de calcul comprenant :

un ou plusieurs processeurs ;
une mémoire en communication avec les un ou plusieurs processeurs, la mémoire présentant des instructions lisibles par ordinateur stockées sur celle-ci qui, lorsqu'elles sont exécutées par les un ou plusieurs processeurs, amènent le dispositif de calcul à :

recevoir (601) des données indiquant si chaque membre du groupe d'utilisateurs a interagi avec chacun de la pluralité des documents ;
déterminer un pourcentage de documents avec lequel chaque groupe d'utilisateurs a interagi sur la base des données reçues ;
calculer une moyenne des pourcentages ;
calculer un écart-type des pourcentages ;
identifier (605) un utilisateur du groupe d'utilisateurs qui a interagi avec un pourcentage de la pluralité de documents inférieur à un seuil défini, dans lequel le seuil est la moyenne des pourcentages moins un score statistique distribué normalement pour un intervalle de confiance ;
sélectionner (607) un canal sur lequel promouvoir un document avec lequel l'utilisateur n'a pas interagi, dans lequel le canal inclut un emplacement au sein d'une application utilisée par l'utilisateur ;
afficher dans l'emplacement au sein de l'application une liste de liens incluant le document avec lequel l'utilisateur n'a pas interagi ;
recevoir une activation du lien ; et
ouvrir le document avec lequel l'utilisateur n'a pas interagi en réponse à l'activation du lien,

$I_\mu - Z(\frac{E}{\sqrt{n}})$ dans lequel le seuil est déterminé sur la base de l'équation $I_\mu$ dans la-

quelle $Z(\frac{E}{\sqrt{n}})$ se réfère au nombre moyen de documents avec lesquels le groupe d'utilisateurs a interagi, dans laquelle $\sqrt{n}$ se réfère au score statistique distribué normalement pour l'intervalle de confiance, dans laquelle Z se réfère à une zone sous une courbe normale standard correspondant à l'intervalle de confiance, dans laquelle E se réfère à un écart type des documents avec lesquels les utilisateurs du groupe ont interagi, et dans laquelle se réfère à une racine carrée d'un nombre d'utilisateurs dans le groupe d'utilisateurs.

6. Dispositif de calcul selon la revendication 5, dans lequel l'utilisateur du groupe d'utilisateurs est identifié sur la base d'une requête envoyée à un autre utilisateur, dans lequel la requête à l'autre utilisateur inclut un document, et dans lequel la requête à l'autre utilisateur est associée à une échéance.

7. Dispositif de calcul selon l'une quelconque des revendications 5 à 6, dans lequel le canal inclut une zone située au bas d'un document.

8. Dispositif de calcul selon la revendication 7, dans lequel le canal inclut une entrée ajoutée à une liste de fichiers.

9. Dispositif de calcul selon la revendication 8, dans lequel la liste de fichiers inclut un dossier de fichiers, une liste de fichiers récemment ouverts ou une liste de pièces jointes à un courrier électronique.

10. Dispositif de calcul selon la revendication 6, dans lequel la liste de liens est en ligne avec une autre liste du document, et dans lequel la liste de liens se distingue visuellement de l'autre liste du document.

**11.** Support lisible par ordinateur stockant des instructions exécutables par ordinateur qui, lorsqu'elles sont exécutées par un processeur, amènent le processeur à mettre en oeuvre un procédé de ciblage intelligent des fichiers nécessitant de l'attention, le procédé comprenant les étapes consistant à :

recevoir (601) des données indiquant si chacun d'un groupe d'utilisateurs a interagi avec chacun de la pluralité des documents ;
déterminer un pourcentage de documents avec lequel chacun du groupe d'utilisateurs a interagi sur la base des données reçues ;
calculer une moyenne des pourcentages ;
calculer un écart-type des pourcentages ;
identifier (605) un utilisateur du groupe d'utilisateurs qui a interagi avec un pourcentage de la pluralité de documents inférieur à un seuil défini, dans lequel le seuil est la moyenne des pourcentages moins un score statistique distribué normalement pour un intervalle de confiance ;
sélectionner (607) un canal sur lequel promouvoir un document avec lequel l'utilisateur n'a pas interagi, dans lequel le canal inclut un emplacement au sein d'une application utilisée par l'utilisateur ;
afficher dans l'emplacement au sein de l'application une liste de liens incluant le document avec lequel l'utilisateur n'a pas interagi ;
recevoir une activation du lien ; et
ouvrir le document avec lequel l'utilisateur n'a pas interagi en réponse à l'activation du lien,

$I_\mu - Z(\frac{E}{\sqrt{n}})$ dans lequel le seuil est déterminé sur la base de l'équation $I_\mu$ dans laquelle $Z(\frac{E}{\sqrt{n}})$ se réfère au nombre moyen de documents avec lesquels le groupe d'utilisateurs a interagi, dans laquelle $\sqrt{n}$ se réfère au score statistique distribué normalement pour l'intervalle de confiance, dans laquelle $Z$ se réfère à une zone sous une courbe normale standard correspondant à l'intervalle de confiance, dans laquelle $E$ se réfère à un écart type des documents avec lesquels les utilisateurs du groupe ont interagi, et dans laquelle se réfère à une racine carrée d'un nombre d'utilisateurs dans le groupe d'utilisateurs.

**12.** Support lisible par ordinateur selon la revendication 11, dans lequel la liste de liens est classée par ordre de priorité sur la base d'un contenu environnant dans l'application où la liste de liens est affichée.

**13.** Support lisible par ordinateur selon l'une quelconque des revendications 11 à 12, dans lequel la liste de liens est classée par ordre de priorité sur la base d'une urgence, dans lequel l'urgence est proportionnelle à une proximité d'une échéance en cours.

FIGURE 1

| | a | b | c | d | e | f | g | h | i | j | k | l | μ % | *f* | Y/N |
|---|---|---|---|---|---|---|---|---|---|---|---|---|---|---|---|
| 1 | 1 | 1 | 1 | 1 | 1 | 1 | 1 | 1 | 1 | 1 | 1 | 0 | .91 | -.899 | N |
| 2 | 0 | 0 | 0 | 0 | 0 | 0 | 0 | 0 | 0 | 0 | 0 | 0 | 0.0 | .017 | Y |
| 3 | 0 | 0 | 0 | 0 | 0 | 0 | 0 | 0 | 0 | 0 | 0 | 0 | 0.0 | .017 | Y |
| 4 | 1 | 1 | 1 | 1 | 1 | 1 | 1 | 1 | 1 | 1 | 0 | 1 | .91 | -.899 | N |
| 5 | 0 | 0 | 0 | 0 | 0 | 0 | 0 | 0 | 0 | 0 | 0 | 0 | 0.0 | .017 | Y |
| 6 | 0 | 0 | 0 | 0 | 0 | 0 | 0 | 0 | 0 | 0 | 0 | 0 | 0.0 | .017 | Y |
| 7 | 0 | 0 | 0 | 0 | 0 | 0 | 0 | 0 | 0 | 0 | 0 | 0 | 0.0 | .017 | Y |
| 8 | 1 | 1 | 1 | 1 | 1 | 1 | 1 | 1 | 1 | 1 | 0 | 0 | .83 | -.816 | N |
| 9 | 0 | 0 | 0 | 0 | 0 | 0 | 0 | 0 | 0 | 0 | 0 | 0 | 0.0 | .017 | Y |
| 10 | 0 | 0 | 0 | 0 | 0 | 0 | 0 | 0 | 0 | 0 | 0 | 0 | 0.0 | .017 | Y |
| 11 | 0 | 0 | 0 | 0 | 0 | 0 | 0 | 0 | 0 | 0 | 0 | 0 | 0.0 | .017 | Y |
| 12 | 0 | 0 | 0 | 0 | 0 | 0 | 0 | 0 | 0 | 0 | 0 | 0 | 0.0 | .017 | Y |
| 13 | 0 | 0 | 0 | 0 | 0 | 0 | 0 | 0 | 0 | 0 | 0 | 0 | 0.0 | .017 | Y |
| 14 | 0 | 0 | 0 | 0 | 0 | 0 | 0 | 0 | 0 | 0 | 0 | 0 | 0.0 | .017 | Y |

Users 204A · Docs 202A · 200A · Average Engagement 206 · *f* Output 208 · Result 210

*FIGURE 2A*

Users 204B · Docs 202B · 200B · Average Engagement 206 · *f* Output 208 · Result 210

| | a | b | c | d | e | f | g | h | i | j | k | l | μ % | *f* | Y/N |
|---|---|---|---|---|---|---|---|---|---|---|---|---|---|---|---|
| 1 | 1 | 1 | 1 | 1 | 1 | 1 | 1 | 1 | 1 | 1 | 1 | 0 | .91 | -.781 | N |
| 2 | 0 | 0 | 0 | 0 | 1 | 0 | 0 | 1 | 0 | 0 | 0 | 0 | .25 | -.114 | Y |
| 3 | 0 | 0 | 0 | 0 | 0 | 0 | 0 | 0 | 0 | 0 | 0 | 0 | 0.0 | .135 | Y |
| 4 | 1 | 1 | 1 | 1 | 1 | 1 | 1 | 1 | 1 | 1 | 0 | 1 | .91 | -.781 | N |
| 5 | 0 | 0 | 0 | 0 | 0 | 0 | 0 | 0 | 0 | 0 | 0 | 0 | 0.0 | .135 | Y |
| 6 | 0 | 0 | 0 | 1 | 1 | 0 | 0 | 0 | 0 | 0 | 0 | 0 | .16 | -.031 | N |
| 7 | 0 | 0 | 1 | 0 | 0 | 1 | 1 | 0 | 0 | 0 | 0 | 0 | .25 | -.114 | N |
| 8 | 1 | 1 | 1 | 1 | 1 | 1 | 1 | 1 | 1 | 1 | 0 | 0 | .83 | -.697 | N |
| 9 | 0 | 0 | 0 | 0 | 0 | 1 | 0 | 0 | 0 | 0 | 0 | 0 | .08 | .052 | Y |
| 10 | 0 | 1 | 0 | 1 | 0 | 0 | 0 | 0 | 1 | 1 | 0 | 0 | .33 | -.197 | N |
| 11 | 0 | 0 | 1 | 0 | 1 | 0 | 0 | 0 | 0 | 1 | 0 | 1 | .33 | -.197 | N |
| 12 | 0 | 0 | 0 | 1 | 0 | 1 | 0 | 1 | 0 | 0 | 0 | 0 | .25 | -.114 | N |
| 13 | 0 | 1 | 0 | 0 | 1 | 0 | 0 | 0 | 0 | 1 | 1 | 0 | .33 | -.197 | N |
| 14 | 0 | 0 | 0 | 0 | 0 | 0 | 1 | 0 | 0 | 1 | 0 | 0 | .16 | -.031 | N |

*FIGURE 2B*

Users 204C  Docs 202C  →200C  Average Engagement 206  *f* Output 208  Result 210

| | a | b | c | d | e | f | g | h | i | j | k | l | μ % | *f* | Y/N |
|---|---|---|---|---|---|---|---|---|---|---|---|---|---|---|---|
| 1 | 1 | 1 | 1 | 1 | 1 | 1 | 1 | 1 | 1 | 1 | 1 | 0 | .91 | -.722 | N |
| 2 | 0 | 1 | 0 | 1 | 1 | 0 | 1 | 1 | 1 | 0 | 0 | 0 | .41 | -.222 | N |
| 3 | 0 | 0 | 1 | 1 | 0 | 1 | 0 | 0 | 0 | 0 | 0 | 0 | .25 | -.056 | N |
| 4 | 1 | 1 | 1 | 1 | 1 | 1 | 1 | 1 | 1 | 1 | 0 | 1 | .91 | -.722 | N |
| 5 | 0 | 0 | 0 | 0 | 0 | 0 | 0 | 0 | 0 | 0 | 0 | 0 | .08 | .110 | Y |
| 6 | 0 | 0 | 0 | 1 | 1 | 0 | 0 | 0 | 0 | 1 | 0 | 0 | .25 | -.056 | N |
| 7 | 0 | 0 | 1 | 0 | 0 | 1 | 1 | 0 | 0 | 0 | 1 | 0 | .33 | -.139 | N |
| 8 | 1 | 1 | 1 | 1 | 1 | 1 | 1 | 1 | 1 | 1 | 0 | 0 | .83 | -.639 | N |
| 9 | 0 | 0 | 0 | 0 | 0 | 1 | 0 | 0 | 0 | 0 | 1 | 0 | .16 | .027 | Y |
| 10 | 0 | 1 | 0 | 1 | 0 | 0 | 0 | 0 | 1 | 1 | 0 | 0 | .33 | -.139 | N |
| 11 | 0 | 0 | 1 | 0 | 1 | 0 | 1 | 0 | 0 | 1 | 0 | 1 | .41 | -.222 | N |
| 12 | 0 | 0 | 0 | 1 | 0 | 1 | 0 | 1 | 0 | 0 | 0 | 1 | .33 | -.139 | N |
| 13 | 0 | 1 | 0 | 0 | 1 | 0 | 0 | 0 | 0 | 1 | 1 | 0 | .33 | -.139 | N |
| 14 | 0 | 0 | 0 | 0 | 0 | 0 | 1 | 0 | 0 | 1 | 0 | 0 | .16 | .027 | Y |

*FIGURE 2C*

EP 3 743 865 B1

| Users 204D | Docs 202D | | | | | | | | | | | | Average Engagement 206 | ƒ Output 208 | Result 210 |
|---|---|---|---|---|---|---|---|---|---|---|---|---|---|---|---|
| | a | b | c | d | e | f | g | h | i | j | k | l | μ % | ƒ | Y/N |
| 1 | 1 | 0 | 0 | 0 | 0 | 0 | 1 | 1 | 1 | 1 | 0 | 1 | .50 | .284 | Y |
| 2 | 1 | 1 | 1 | 0 | 1 | 1 | 1 | 1 | 1 | 1 | 1 | 1 | .83 | -.048 | N |
| 3 | 1 | 1 | 1 | 1 | 1 | 1 | 1 | 1 | 1 | 1 | 1 | 1 | 1 | -.215 | N |
| 4 | 1 | 1 | 1 | 1 | 1 | 1 | 1 | 1 | 1 | 1 | 1 | 1 | 1 | -.215 | N |
| 5 | 1 | 1 | 1 | 1 | 1 | 1 | 1 | 1 | 1 | 1 | 1 | 1 | 1 | -.215 | N |
| 6 | 1 | 1 | 1 | 1 | 1 | 1 | 0 | 0 | 1 | 1 | 1 | 1 | .83 | -.048 | N |
| 7 | 1 | 1 | 0 | 1 | 0 | 1 | 1 | 0 | 1 | 1 | 1 | 1 | .75 | .034 | Y |
| 8 | 1 | 1 | 1 | 1 | 1 | 1 | 1 | 1 | 1 | 1 | 1 | 1 | 1 | -.215 | N |
| 9 | 1 | 1 | 1 | 1 | 1 | 1 | 1 | 1 | 1 | 1 | 1 | 1 | 1 | -.215 | N |
| 10 | 1 | 1 | 1 | 1 | 1 | 1 | 1 | 1 | 0 | 1 | 1 | 1 | .92 | -.131 | N |
| 11 | 1 | 1 | 1 | 1 | 1 | 1 | 1 | 1 | 1 | 1 | 1 | 1 | 1 | -.215 | N |
| 12 | 1 | 1 | 1 | 1 | 1 | 1 | 1 | 1 | 1 | 1 | 0 | 1 | .92 | -.131 | N |
| 13 | 1 | 1 | 1 | 1 | 1 | 1 | 1 | 1 | 1 | 1 | 1 | 1 | 1 | -.215 | N |
| 14 | 1 | 1 | 1 | 1 | 1 | 1 | 1 | 1 | 1 | 1 | 1 | 1 | 1 | -.215 | N |

200D

*FIGURE 2D*

Spreadsheet Processing Application

304

← 
Info
New
Open
Save
Save As
Print
Share
Export
Close
----------
Account
Options

Open    306

Recent Documents

CloudDrive

Computer

+ Add a Place

308

Recent Documents

2017 income.xlsx

2016 taxes.xlsx

Birthday wish list.xlsx

→ **Expense Report Review.xlsx** 310

→ **Security Briefing.eml** 312

→ **Mark's Draft For Review.docx** 314

300

*FIGURE 3*

*FIGURE 4*

FIGURE 5

/— 600

RECEIVE USER DATA DEFINING A LEVEL OF
INTERACTION OF EACH OF A GROUP OF USERS WITH
EACH OF A PLURALITY OF DOCUMENTS — 601

DETERMINE A MEAN LEVEL OF ENGAGEMENT BY THE
GROUP OF USERS IN THE PLURALITY OF DOCUMENTS — 603

IDENTIFY A USER HAVING A LEVEL OF ENGAGEMENT
IN THE PLURALITY OF DOCUMENTS BELOW A
DEFINED THRESHOLD — 605

SELECT A CHANNEL TO PROMOTE DOCUMENTS THE
USER HAS NOT INTERACTED WITH BASED ON USER
APPLICATION USAGE DATA — 607

DELIVER DOCUMENTS THE USER HAS NOT
INTERACTED WITH TO THE SELECTED CHANNEL — 609

# FIGURE 6

FIGURE 7

**EP 3 743 865 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017344541 A1
- US 2006259524 A1
- US 2015319198 A1
- US 2011276925 A1
- US 2015220519 A1
- US 2006080619 A1
- US 2016321250 A1